# NEUE EUROPÄISCHE PATENTSCHRIFT

(11) **EP 0 667 063 B2**
(45) Veröffentlichungstag und Bekanntmachung des Hinweises auf die Entscheidung über den Einspruch: **13.04.2005**
(45) Hinweis auf die Patenterteilung: 25.09.1996
(21) Anmeldenummer: 93923455.5
(22) Anmeldetag: 02.11.1993
(51) Int. Cl.: H04B 1/66, G11B 20/18, H04H 5/00, G11B 20/00

(54) **VERFAHREN ZUR ÜBERTRAGUNG UND/ODER SPEICHERUNG DIGITALER SIGNALE MEHRERER KANÄLE**
PROCESS FOR TRANSMITTING AND/OR STORING DIGITAL SIGNALS FROM SEVERAL CHANNELS
PROCEDE DE TRANSMISSION ET/OU DE MEMORISATION DE SIGNAUX NUMERIQUES PROVENANT DE PLUSIEURS CANAUX

(30) Priorität: 02.11.1992 DE 4236989
(43) Veröffentlichungstag der Anmeldung: 16.08.1995
(73) Patentinhaber: Fraunhofer-Gesellschaft zur Förderung der angewandten Forschung e.V., 80686 München (DE)
(72) Erfinder: EBERLEIN, Ernst, D-91091 Gro enseebach (DE); HERRE, Jürgen, D-91054 Buckenhof (DE); GRILL, Bernhard, D-91126 Rednitzhembach (DE); BRANDENBURG, Karl-Heinz, D-91054 Erlangen (DE); SEITZER, Dieter, D-91054 Erlangen (DE)
(74) Vertreter: Zinkler, Franz, Dipl.-Ing.
(86) Internationale Anmeldenummer: PCT/DE1993/001047
(87) Internationale Veröffentlichungsnummer: WO 1994/010758

(56) Entgegenhaltungen:
- EP-A- 0 176 243
- EP-A- 0 289 080
- EP-A- 0 402 973
- WO-A-88/01811
- WO-A-89/08357
- WO-A-90/09064
- US-A- 4 170 719
- IEEE JOURNAL ON SELECTED AREAS IN COMMUNICATION Bd. 10, Nr. 5 , Juni 1992 , NEW-YORK, US Seiten 796 - 810 XP274716 NIKIL 'Signal Compression: Technology Targets and Research Directions'
- SYMPOSIUM RECORD. BROADCAST SESSIONS 13. Juni 1991 , ? Seiten 612 - 617 XP271997 DEHERY ET AL 'Musicam source coding for digital sound'
- Preprint 3403, 93rd AES Convention, October 1-4, 1992 "Musicam-surround: A universal ..."

## Beschreibung

### Technisches Gebiet

Die Erfindung bezieht sich auf ein Verfahren zur Übertragung und/oder Speicherung digitaler Signale mehrerer Kanäle gemäß dem Oberbegriff des Patentanspruchs 1.

### Stand der Technik

Verfahren, bei denen digitale Signale, insbesondere Audiosignale, frequenzcodiert übertragen werden, sind beispielsweise aus den PCT-Veröffentlichungen WO 88/01811 und WO 89/08357 bekannt.

Für einkanalige und zweikanalige Übertragung wurde von dem Standardisierungsgremium Moving Pictures Experts Group (MPEG.) der Internationalen Standardisierungs-Organisation (ISO) der Standard ISO-11172-3 für die Codierung und den zu übertragenden Bitstrom von Audiosignalen festgelegt.

Bei den genannten Codierverfahren werden psychoakustische Modelle eingesetzt, die es erlauben, die zu übertragende Datenmenge unter Ausnutzung der Eigenschaften des menschlichen Gehörs ohne wesentliche Einbuße an Qualität stark zu verringern.

Zur Erläuterung der hier nicht näher erklärten Begriffe sei auf die Veröffentlichungen und den Standard ausdrücklich Bezug genommen.

Bei der Weiterentwicklung des internationalen Standards wird gegenwärtig unter anderem an der Datenreduzierung bei der Übertragung mehrerer Kanäle gearbeitet. In der Fachveröffentfichung "MUSICAM-Surround: A Universal Multi-Channel Coding System Compatible with ISO 11172-3", 93 rd AES Convention, 1992, San Francisco, wird ein Verfahren zur Übertragung von bis zu 5 Kanälen vorgeschlagen. Beispielsweise können zwei Stereokanäle und zusätzlich ein Mittenkanal sowie zwei Seitenkanäle (3/2 Stereofonie) oder zwei Stereokanäle und drei Kommentar-Kanäle übertragen werden.

Eine zusätzliche Datenreduktion wird dadurch erreicht, daß Teile der Stereosignale, die im Hinblick auf die räumliche Wahrnehmung unbedeutend sind, nur in einem Kanal übertragen werden. Zusätzlich werden Skalenfaktoren übertragen, die ein Maß darstellen, mit welcher Intensität die Signale aus dem Monokanal auf die entsprechenden Lautsprecher geleitet werden. Insbesondere im unteren Frequenzbereich können bei diesem Verfahren Artefakte erzeugt werden, die den Hörgenuß mindern. Hierzu wird auf die EP 0402973A1 verwiesen.

Daneben wird zur Reduzierung der zu übertragenden Datenmenge vorgeschlagen, nicht für jeden Kanal eine sogenannte Intra-Kanal Maskierungsschwelle für die Codierung zu bestimmen, sondern für alle Kanäle eine gemeinsame Schwelle anzugeben, die den Inter-Kanal-Maskierungseffekt berücksichtigt. Die Verwendung einer gemeinsamen Maskierungsschwelle hat jedoch zur Folge, daß in der Nähe eines Lautsprechers störende Codierungs-Geräusche wahrnehmbar sein können.

Aus der EP 0 176 243 A2 ist eine Codiervorrichtung für Sprachsignale bekannt, die eine Reihe von Werten erzeugt, die Teilen des Frequenzspektrums der Sprachsignale entsprechen und diese anschließend codiert. Die codierten Werte werden im folgenden mittels Bitumwandler gemäß ihrer Energieäquivalente umgewandelt, wobei die Anzahl der erzeugten und in Bits umgewandelten Werte konstant, jedoch eine Auswahl von Werten mit verschiedenen Bitzuordnungen variabel ist.

Aus Preprint 3403, 93^{rd} AES Convention , October 1-4, 1992, "Musicam-suround; A universal..." ist es ferner bekannt für bestimmte Zeitintervalle und bestimmte Frequenzspektren mittels Signalanalyse identifizierte Subband-Signale in einem einzigen Kanal zu übertragen.

### Beschreibung der Erfindung

Der Erfindung liegt die Aufgabe zugrunde, ein Verfahren zur Übertragung und/oder Speicherung digitaler Signale mehrerer Kanäle bereitzustellen, das eine zusätzliche Reduzierung der zu übertragenden Datenmenge zuläßt und das zu keiner subjektiv wahrnehmbaren Störung der übertragenen Signale führt.

Diese Aufgabe wird durch ein Verfahren mit den Merkmalen des Anspruchs 1 gelöst.

Erfindungsgemäß werden die Signale der verschiedenen Kanäle zunächst in Spektralwerte überführt. Anschließend wird unter Zuhilfenahme der Spektralwerte korrespondierender Segmente der verschiedenen Kanäle festgestellt, in welchen Kanälen ähnliche Spektralanteile auftreten.

Dabei wird untersucht, ob bei der Zusammenfassung von Segmenten aus verschiedenen Kanälen, die durch das gemeinsame Codieren verursachten Störungen, unterhalb der Mithörschwelle liegen, oder ob Artefakte erzeugt werden. Wenn keine Artefakte zu erwarten sind, wird die Zusammenfassung erlaubt. Auf diese Weise werden die K-Eingangskanäle segmentweise auf spektrale Datenkanäle (Transmitted Spectral Channels) abgebildet.

Je verschiedener die ursprünglichen Eingangskanäle sind, desto mehr verschiedene spektrale Datenkanäle müssen benutzt werden, um die Signalinformationen zu übermitteln. Sind im Extremfall in einem Segment alle Kanäle praktisch gleich, so kann, insbesondere für die oberen Teile des Spektrums, ein einziger spektraler Datenkanal genügen. Die Amplituden der spektralen Segmente können über die jeweiligen Skalefaktoren gesteuert werden.

Die Anzahl NTSC (Number of Transmitted Spectral Channels) der benötigten spektralen Datenkanale ist variabel und kann kleiner oder höchstens gleich der Zahl K der Eingangs- bzw. Ausgangskanale sein.

Um die Zusammensetzung der K-Ausgangskanäle aus den NTSC spektralen Datenkanälen im Decoder steuern zu können, wird neben den (verminderten) Signal-Daten eine Liste mit Informationsdaten (SEGMENT_DATA) übertragen. Sie beschreibt, wie Spektralwerte der Ausgangskanäle aus den Seiten der spektralen Datenkanäle zusammengesetzt werden.

Die zur Rekonstruktion eines Segments eines Ausgangskanals nötigen Steuerbefehle sind in einem Informations-Block (SEGMENT_INFO) zusammengefaßt. Dieser Block enthält Felder für die Länge des Segments (SEG_LENGTH), für die Auswahl des spektralen Datenkanals (TSC_SELECT) und für die Skalenfaktoren (scf).

Die codierten spektralen Daten (TSC_DATA) eines bestimmten spektralen Datenkanals (TSC_NUM) werden im Decoder decodiert, wobei die zuaehörigen Skalenfaktoren (scf) die Rekonstruktionsmatrix bestimmen Vorteilhafte Ausgestaltungen und Weiterbildungen der Erfindung sind in den Unteransprüchen gekennzeichnet.

Die Informationen zur Rekonstruktion der Segmente eines Ausgangssignals werden nach Anspruch2 zu einer Liste (SEGMENT_LIST) aneinandergereiht.

Nach Anspruch 3 bilden die Listen der Segmente der einzelnen Ausgangskanäle die Gesamtliste (SEGMENT_ DATA). In der Gesamtliste sind somit die Listen für einen linken Kanal (LEFT_CHANNEL), einen rechten Kanal (RIGHT_CHANNEL), für einen Mittenkanal (CENTER_CHANNEL) und für weitere Kanäle aufgelistet.

Nach einer vorteilhaften Ausgestaltung der Erfindung gemäß Anspruch 4 werden bilden die Kanäle einen Mehrkanalton. Beispielsweise werden die 5 Kanäle der 3/2 Stereofonie übertragen. Neben den zwei Stereokanälen werden dabei ein Mittenkanal, ein linker Seitenkanal (LS_CHANNEL) und ein rechter Seitenkanal (RS_CHANNEL) übertragen. Die übertragenen Kanäle werden nach der Rücktransformation in den Zeitbereich auf die entsprechenden fünf Lautsprecher der 3/2 Stereofonie geleitet.

Bei einer weiteren Ausgestaltung nach Anspruch 5 werden neben den üblichen zwei Stereokanälen mehrere zusätzliche Kommentar-Kanäle übertragen. In diesen Kanälen können beispielsweise beim HDTV (High Definition Television) die Audiosignale in verschiedenen Sprachen übertragen werden. Der Zuseher kann dann zu dem fest vorgegebenen Fernsehbild die gewünschte Sprache auswählen. Dabei kann die Sprache z. B. den beiden Stereokanälen dynamisch zugemischt werden.

Nach Anspruch 6 erfolgt die Übertragung der spektralen Datenkanäle mit einem Verfahren, das mit dem Standard ISO 11172-3 kompatibel ist. Alle drei Layer dieses Standards können dabei der Übertragung der spektralen Datenkanäle zugrundegelegt werden.

Gemäß Anspruch 7 werden bei der Codierung Gruppen von Spektralwerten, die durch einen gemeinsamen Skalenfaktor skaliert werden, also zu einem scalefactor band gehören, nicht übertragen, wenn dieses scalefactor band in keinem Informations-Block (SEGMENT_INFO) angefordert wird. In diesem Fall werden die entsprechenden Spektralwerte für die Rekonstruktion der Ausgangskanäle nicht benötigt. Dabei wird vorteilhaft die feste Skalenbandeinteilung des ISO-Standards herangezogen.

Die Signalisierung der unbenutzten scalefactor bands erfolgt nach Anspruch 8 implizit, das heißt, daß zu dieser Signalisierung keine zusätzliche Information übertragen werden muß.

Nach Anspruch 9 können mit dem erfindungsgemäßen Verfahren auch Linearkombinationen der zu übertragenden Kanäle gebildet werden. Dies führt zu einer weiteren Reduzierung der Datenmenge, wenn sich die Spektralwerte in den einzelnen Kanälen stark ähneln. Die Signale der Ausgangskanäle werden in diesem Fall durch Linearkombinationen der rekonstruierten Spektralwerte gebildet.

Nach Anspruch 10 übersteigt die für die Übertragung der codierten Daten aus allen Kanälen benötigte Bitrate nicht 384 kbit/s. Damit werden die Anforderungen an die maximale Bitrate des Layer III des ISO-Standards erfüllt.

Die wesentlichen Vorteile der Erfindung bestehen darin, daß durch die Abbildung der Eingangskanäle auf eine geringere Anzahl von virtuellen spektralen Kanälen eine deutliche Reduzierung der zu übertragenden Datenmenge erreicht wird, ohne daß hörbare Einbußen bei der Qualität hingenommen werden müßten. Damit können Audiosignale mit besonders hoher räumlicher Auflösung übertragen werden. Dies ist besonders in großen Räumen mit einer Vielzahl von Zuhörern von Vorteil.

Daneben können Einzelverbrauchern mehrere Kanäle zur Verfügung gestellt werden, aus denen sie gewünschte Informationen auswählen können. Beispielsweise können die Audio-Kanäle zu einem Fernsehprogramm in mehreren Sprachen gleichzeitig übertragen werden, unter denen der Zuseher die gewünschte auswählt.

Die technisch aufwendigeren Verfahrensschritte zur Realisierung des Verfahrens werden im Encoder vorgenommen. der den zu übertragenden Bitstrom bereitstellt. Der Decoder arbeitet lediglich die Informationen des ankommenden Bitstroms sukzessive ab und ist wesentlich einfacher aufgebaut als der Encoder. Deshalb erfordert das erfindungsgemäße Verfahren nur in den wenigern Encodern einen höheren Grad an Komplexität, während die für Verbraucher in größeren Stückzahlen erforderlichen Decoder kaum an Komplexität zunehmen.

### Beschreibung eines Ausführungsbeispiels

Die Erfindung wird nachfolgend anhand eines Ausführungsbeispiels näher beschrieben.

Dem Ausführungsbeispiel wird der Standard ISO 11172-3 der Moving Picture Expert Group (MEPG) der International Organization for Standardization zugrundegelegt. Dieser Standard wird im folgenden mit MPEG-1 bezeichnet. Die Betrachtung beschränkt sich ohne Einschränkung der Allgemeinheit der Erfindung auf Layer III des Standards. Wie beim Standard MPEG-1 / Layer III werden die mathematischen Operationen ähnlich der Programmiersprache C verwendet

Mit Hilfe von Filterbänken werden die Signale der 5 Eingangskanäle aus dem Zeitbereich in den Freqzenzbereich, in Subbänder (Sb), abgebildet. Dabei werden die Eingangssignale in unterabgetastete Spektralwerte zerlegt.

Unter Benutzung von in der Psychoakustik bekannten Gesetzmäßigkeiten wird abgeschätzt, welche Segmente der verschiedenen Kanäle zusammengefaßt werden können, ohne daß Artefakte entstehen, die oberhalb der Mithörschwelle liegen.

Die Frequenzwerte der Eingangskanäle werden entweder einzeln oder als Linearkombinationen quantisiert und codiert. Dies geschieht mit der Maßgabe, daß die durch die Quantisierung entstehenden Fehler unterhalb der Mithorschwellen liegen.

Anschließend wird der zu übertragende Bitstrom zusammengesetzt. Er enthält die quantisierten und codierten Frequenzwerte der spektralen Datenkanäle sowie Nebeninformationen. Diese bestehen aus Skalenfaktoren, Bitzuteilung, Informationen über die im aktuellen Block verwendeten Tabellen und anderen Parameter und den Listen, die angeben, wie die decodierten Frequenzwerte der spektralen Datenkanäle zur Rekonstruktion der Ausgangskanäle zusammengesetzt werden.

Diese Listen sind als Zusatzinformationen dem Bitstrom gemäß MPEG 1 angefügt.

Diese Erweiterung (MPEG2 _ extension_data) wird nachfolgend aufgelistet:

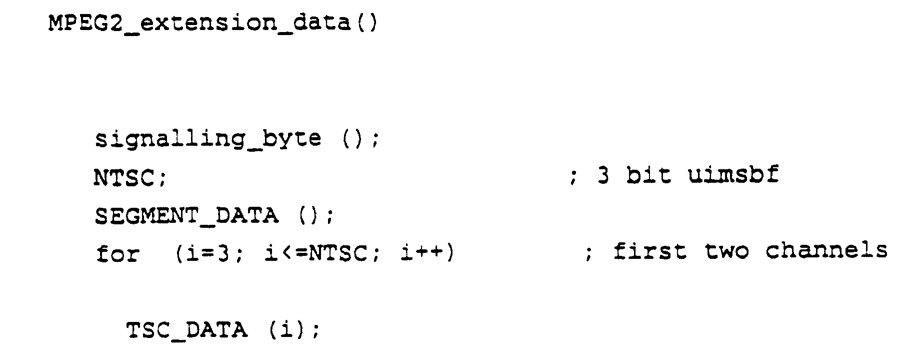

Dabei gibt der Ausdruck signalling_byte an, wieviele und welche Eingangs- bzw. Ausgangskanäle verwendet werden. Er legt fest, ob eine Monokanal, Stereo-Kanäle, ein Mittenkanal oder Nebenkanäle usw. übertragen werden.

NTSC gibt die Zahl der benötigten spektralen Datenkanäle an.

SEGMENT_DATA beschreibt die Liste für die Rekonstruktion der Ausgangskanäle und beinhaltet die Listen für die Rekonstruktionen der einzelnen Kanäle (SEGMENT_LIST).

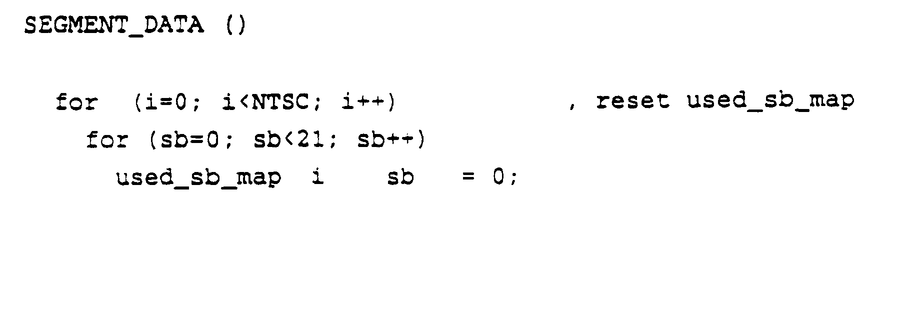

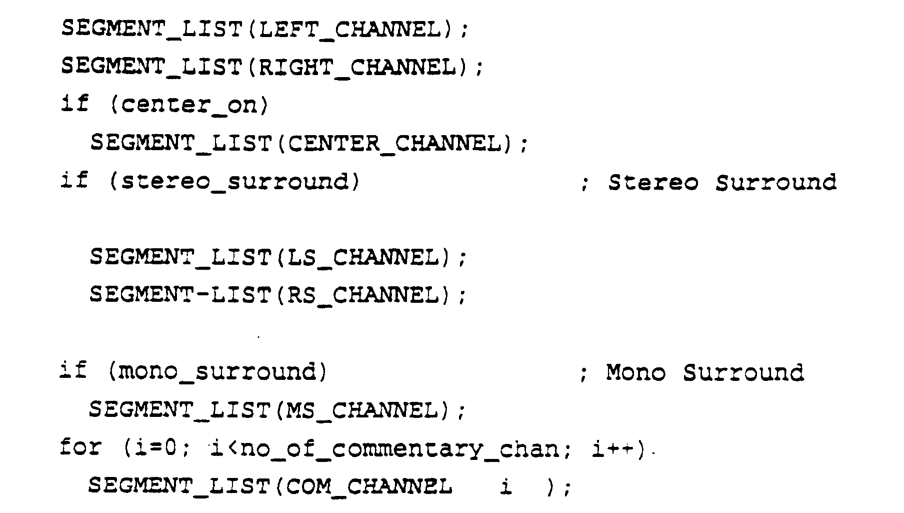

Die Funktion used_sb_map gibt an, ob ein scalefaktor band, das die Spektralwerte eines spektralen Datenkanals enthält, die durch einen gemeinsamen Skalenfaktor skaliert werden, benutzt wird. Falls ein solches scalfactor band von keinem Informations-Block (SEGMENT_INFO) benutzt wird, werden die entsprechenden Spektralwerte nicht übertragen.

Die Liste für die Rekonstruktion eines bestimmten Kanals (SEGMENT_LIST) enthält Informationen über die Segmentlänge (SEG_LENGTH), die Größe der Skalenfaktoren (scalefac_size), die Skalenfaktoren (scf) und die Auswahl des spektralen Datenkanals (TSC_SELECT).

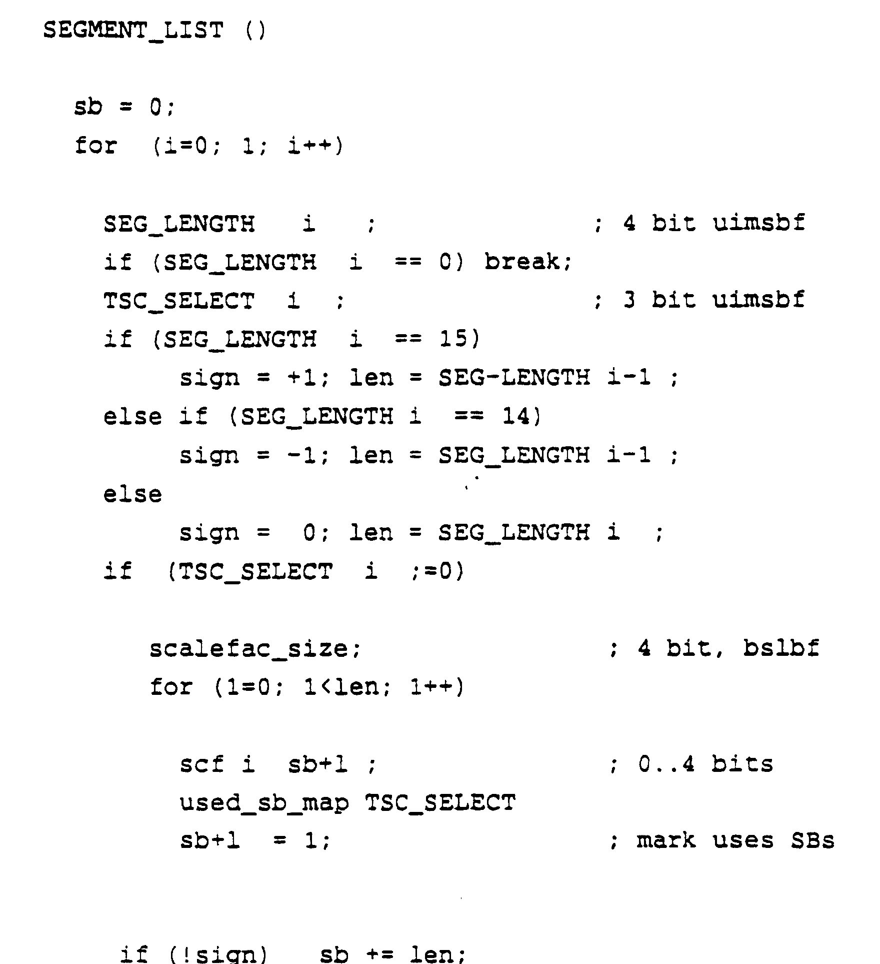

Die Werte 14 und 15 sind bei dem Ausführungsbeispiel für das Bilden von Linearkombinationen von rekonstruierten Spektralwerten reserviert. Dabei wird bei
SEG_LENGTH == 15 addiert und
bei SEG_LENGTH == 14 subtrahiert.

Der Bitstrom für die Daten aus dem spektralen Datenkanal entspricht dem Bitstrom der Hauptdaten bei MPEG-1/Layer III und lautet:

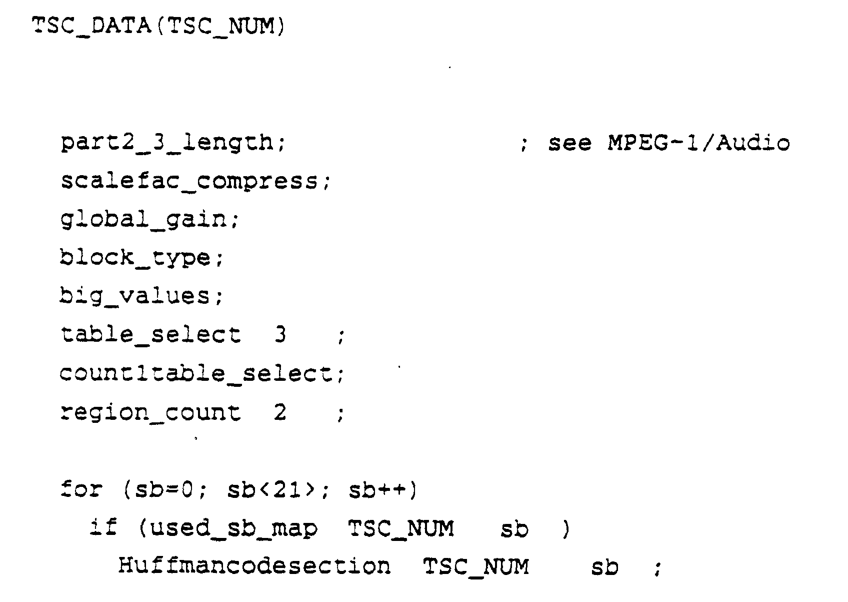

Die benutzten Symbole bedeuten:
- ++: Erhöhung
- ==: gleich
- =: Zuweisungsoperator
- !: logisches nicht
- bslbf: Bit string, left bit first
- ch: Channel
- sb: Subband
- uimsbf: Unsigned integer, most significant bit first

## Patentansprüche

1. Verfahren zur Übertragung und/oder Speicherung digitaler Audiosignale, die an K getrennten Eingangskanälen anliegen,
bei dem Abtastwerte der Signale aus dem Zeitbereich blockweise in den Frequenzbereich als Spektralwerte überführt werden,
diese Spektralwerte codiert und zu einem Bitstrom zusammengesetzt werden, der übertragen und/oder gespeichert wird, und
zur Rückgewinnung der Audiosignale der Bitstrom decodiert und in K getrennte Ausgangskanäle im Zeitbereich zurückübertragen wird,
**dadurch gekennzeichnet, daß** bei der Codierung eine segmentweise variable Anzahl virtueller, spektraler Datenkanäle (TSC) gebildet wird, wobei die Festlegung der für jedes Segment benötigten Zahl von Datenkanälen, die höchstens gleich K ist, wie folgt vorgenommen wird:
- für die Bestimmung der Anzahl der erforderlichen Datenkanäle wird die spektrale Information der Blöcke der einzelnen Eingangskanäle segmentweise herangezogen,
- anhand der Spektralwerte korrespondierender Segmente der verschiedenen Eingangskanäle wird festgestellt, in welchen Eingangskanälen Spektralanteile auftreten, die so ähnlich sind, daß die bei einer gemeinsamen Codierung verursachten Störungen unterhalb der Mithörschwelle liegen oder keine Artefakte erzeugt werden,
- die ähnlichen Spektralwerte werden zusammengefaßt, d.h. in einem virtuellen spektralen Datenkanal (TSC) übertragen bzw. gespeichert, so daß die Zahl der für jedes Segment gebildeten virtuellen spektralen Datenkanäle (TSC) umso größer ist, je verschiedener die Audiosignale der K Eingangskanäle sind,
- die Anzahl (NTSC) und die Struktur der virtuellen, spektralen Datenkanäle werden in den Bitstrom aufgenommen,
- zur Decodierung des Bitstroms werden unter Zuhilfenahme dieser Informationen (SEGMENT-DATA) die K Ausgangskanäle segmentweise aus den übertragenen virtuellen, spektralen Datenkanälen (TSC) zusammengesetzt,
- wobei die Informationen (SEGMENT-DATA) sich zusammensetzen aus Listen zur Rekonstruktion der einzelnen Kanäle (SEGMENT LIST) mit Informationen zur Rekonstruktion eines Segments eines Ausgangskanals, die in einem Informations-Block (SEGMENT-INFO) zusammengefaßt sind, der ein Feld für die Länge des Segments (SEG-LENGTH), ein Feld für die Auswahl des benötigten spektralen Datenkanals (TSC-SELECT) und ein Feld für einen Satz von Skalenfaktoren (scf) umfaßt, die die Rekonstruktonsamplitude der codierten Spektralwerte des spektralen Datenkanals (TSC-DATA) im Decoder bestimmen.

2. Verfahren nach Anspruch 1,
, **dadurch gekennzeichnet, daß** zur Rekonstruktion eines bestimmten Ausgangskanals aus den Spektralwerten des spektralen Datenkanals (TSC_DATA) die Informationen der Segmente (SEGMENT_INFO) zu einer Liste (SEGMENT_LIST) aneinandergereiht werden

3. Verfahren nach einem der Ansprüche 1 oder 2,
**dadurch gekennzeichnet, daß** zur Rekonstruktion der K Ausgangskanäle aus den Spektralwerten der spektralen Datenkanäle die Informationen zur Rekonstruktion der einzelnen Ausgangskanale (SEGMENT_LIST) zu einer Liste (SEGMENT_DATA) aneinandergereiht werden

4. Verfahren nach einem der Ansprüche 1 bis 3,
**dadurch gekennzeichnet, daß** die Ein- bzw. Ausgangskanäle einen Mehrkanalton bilden.

5. Verfahren nach einem der Ansprüche 1 bis 3,
**dadurch gekennzeichnet, daß** die Ein- bzw. Ausgangskanäle ein Stereopaar und weitere zusätzliche Kommentar-Kanäle bilden.

6. Verfahren nach einem der Ansprüche 1 bis 5,
**dadurch gekennzeichnet, daß** die spektralen Datenkanäle (TSC) mit einem Verfahren codiert und übertragen werden, das zu dem Standard ISO 11172-3 der International Organization for Standardization, Coding of moving pictures and associated audio, kompatibel ist.

7. Verfahren nach einem der Ansprüche 1 bis 6,
**dadurch gekennzeichnet, daß** bei der Codierung der Spektralwerte eine Codierung eingesetzt wird, bei welcher Gruppen von Spektralwerten, die durch einen gemeinsamen Skalenfaktor skaliert werden, zusammengefaßt werden (scalefactor band) und daß Spektralwerte, die zu scalefactor bands gehören, die in keinem Informations-Block (SEGMENT_INFO) benutzt werden, nicht übertragen werden.

8. Verfahren nach Anspruche 7,
**dadurch gekennzeichnet, daß** die Signalisierung der unbenutzten scalefactor bands implizit erfolgt.

9. Verfahren nach einem der Ansprüche 1 bis 8,
**dadurch gekennzeichnet, daß** die Codierung der Eingangskanäle und die Abbildung der Eingangskanäle auf spektrale Datenkanäle (TSC) derart erfolgt, daß zur Rekonstruktion von Ausgangskanälen Linearkombinationen von rekonstruierten Spektralwerten aus verschiedenen spektralen Datenkanälen gebildet werden.

10. Verfahren nach einem der Ansprüche 1 bis 9,
**dadurch gekennzeichnet, daß** die Bitrate zur Übertragung der codierten Daten aller Kanäle 384 kbit/s nicht übersteigt.

## Claims

1. A method of transmitting and/or storing digital audio signals applying at K separate input channels, wherein samples of the signals are transferred block by block from the time domain into the frequency domain as spectral values, these spectral values are encoded and assembled to form a bit stream which is transmitted and/or stored, and the bit stream is decoded for recovering the audio signals and retransmitted into K separate output channels in the time domain,
**characterized in that** when decoding, a variable number of virtual spectral data channels (TSC) are formed segment by segment, wherein the determination of the number of data channels required for each segment, which at most equals K, is performed as follows:
the spectral information of the blocks of the individual input channels is taken segment by segment for determining the number of data channels required,
it is determined with the help of the spectral values of corresponding segments of the different input channels, in which input channels there are spectral portions which are so similar that the disturbances caused in a common encoding are below the masked threshold or no artefacts are produced, similar spectral values are summarized, i. e. transmitted in a virtual spectral data channel (TSC) and stored, respectively, so that the number of virtual spectral data channels (TSC) formed for each segment is the higher, the more different the audio signals of the K input channels are,
the number (NTSC) and the structure of the virtual spectral data channels are taken up into the bit stream,
for decoding the bit stream, the K output channels are assembled, segment by segment, from the transmitted virtual spectral data channels (TSC) with the help of this information (SEGMENT-DATA),
wherein the information (SEGMENT-DATA) is assembled of lists for reconstructing the individual channels (SEGMENT-LIST) with information for reconstructing a segment of an output channel summarized in an information block (SEGMENT-INFO) including a field for the length of the segment (SEG-LENGTH), a field for the selection of the required spectral data channel (TSC-SELECT) and a field for a set of scale factors (scf) which determine the reconstruction amplitude of the encoded spectral values of the spectral data channel (TSC-DATA) in the decoder.

2. The method according to claim 1,
**characterized in that** for reconstructing a certain output channel from the spectral values of the spectral data channel (TSC_data), the information of the segments (SEGMENT_INFO) is lined up to form a list (SEGMENT_LIST).

3. The method according to one of claims 1 or 2,
**characterized in that** for reconstructing the K output channels from the spectral values of the spectral data channels, the information for reconstructing the individual output channels (SEGMENT_LIST) is lined up to form a list (SEGMENT_DATA).

4. The method according to one of claims 1 to 3,
**characterized in that** the input and output channels, respectively, form a multi-channel sound.

5. The method according to one of claims 1 to 3,
**characterized in that** the input and output channels, respectively, form a stereo pair and further additional comment channels.

6. The method according to one of claims 1 to 5,
**characterized in that** the spectral data channels (TSC) are encoded and transmitted by a method which is compatible with the standard ISO 11172-3 of the International Organization for Standardization. Coding of moving pictures and associated audio.

7. The method according to one of claims 1 to 6,
**characterized in that** when encoding the spectral values, a type of encoding is used where groups of spectral values which are scaled by a common scale factor are summarized (scalefactor band) and **in that** spectral values belonging to scalefactor bands which are not used in any information block (SEGMENT_INFO) are not transmitted.

8. The method according to claim 7,
**characterized in that** the signalling of the unused scalefactor bands takes place implicitly.

9. The method according to one of claims 1 to 8,
**characterized in that** the encoding of the input channels and the mapping of the input channels to spectral data channels (TSC) takes place such that for reconstructing output channels, linear combinations of reconstructed spectral values from different spectral data channels are formed.

10. The method according to one of claims 1 to 9,
**characterized in that** the bit rate for transmitting the encoded data of all the channels does not exceed 384 kbits/s.

## Revendications

1. Procédé de transmission et/ou de mémorisation de signaux audio numériques qui sont présents sur K canaux d'entrée séparés,
dans lequel les valeurs de balayage des signaux sont transposées par bloc du domaine du temps au domaine de la fréquence comme valeurs spectrales, ces valeurs spectrales étant codées et assemblées pour former un train binaire qui est transmis et/ou mémorisé et qui, pour récupérer les signaux audio du train binaire, est décodé et retransposé au domaine du temps dans K canaux de sortie séparés,
**caractérisé par le fait qu'**il est formé, lors du codage, un nombre variable par segment de canaux de données spectrales virtuels (TSC), la fixation du nombre de canaux de données requis pour chaque segment, qui est tout au plus égal à K, s'effectuant comme suit :
- pour la détermination du nombre de canaux de données nécessaires est utilisée par segment l'information spectrale des blocs des différents canaux d'entrée,
- à l'aide des valeurs spectrales de segments correspondants des différents canaux d'entrée, on constate les canaux d'entrée dans lesquels se présentent des parties spectrales qui sont si similaires que les perturbations provoquées lors d'un codage commun se situent au-dessous du seuil d'audibilité ou qu'il n'est pas généré d'artifices,
- les valeurs spectrales similaires sont assemblées, c'est-à-dire transférées dans un canal de données spectrales virtuel (TSC) ou mémorisées, de sorte que le nombre de canaux de données spectrales virtuels (TSC) formés pour chaque segment soit d'autant plus grand que les signaux audio des K canaux d'entrée sont différents,
- le nombre (NTSC) et la structure des canaux de données spectrales virtuels sont repris dans le train binaire,
- pour le décodage du train binaire, les K canaux de sortie sont, à l'aide de ces informations (SEGMENT-DATA), assemblés par segment à partir des canaux de données spectrales virtuels (TSC) transmis,
les informations (SEGMENT-DATA) étant composés à partir de listes pour la reconstruction des différents canaux (SEGMENT-LIST) avec des informations pour la reconstruction d'un segment d'un canal de sortie qui sont rassemblées dans un bloc d'information (SEGMENT-INFO) comportant un champ pour la longueur du segment (SEG-LENGTH), un champ pour la sélection du canal de données spectrales (TSC-SELECT) requis et un champ pour un jeu de facteurs d'échelle (scf) qui déterminent l'amplitude de reconstruction des valeurs spectrales codées du canal de données spectrales (TSC-DATA) dans le décodeur.

2. Procédé selon la revendication 1, **caractérisé par le fait que**, pour la reconstruction d'un canal de sortie déterminé à partir des valeurs spectrales du canal de données spectrales (TSC_DATA), les informations des segments (SEGMENT_INFO) sont juxtaposées, pour former une liste (SEGMENT_LIST).

3. Procédé selon l'une des revendications 1 ou 2, **caractérisé par le fait que**, pour la reconstruction des K canaux de sortie à partir des valeurs spectrales des canaux de données spectrales, les informations pour la reconstruction des différents canaux de sortie [SEGMENT_LIST) sont juxtaposées, pour former une liste (SEGMENT_DATA).

4. Procédé selon l'une des revendications 1 à 3, **caractérisé par le fait que** les canaux d'entrée ou de sortie forment un son multicanal.

5. Procédé selon l'une des revendications 1 à 3, **caractérisé par le fait que** les canaux d'entrée ou de sortie forment une paire stéréo et d'autres canaux de commentaire supplémentaires.

6. Procédé selon l'une des revendications 1 à 5, **caractérisé par le fait que** les canaux de données spectrales (TSC) sont codés et transmis par un procédé qui est compatible avec la norme ISO 11172-3 de l'Organisation Internationale de Normalisation, codage d'images mobiles et d'audio associé.

7. Procédé selon l'une des revendications 1 à 6, **caractérisé par le fait qu'**il est utilisé, lors du codage des valeurs spectrales, un codage dans lequel sont assemblés des groupes de valeurs spectrales qui sont échelonnés par un facteur d'échelle commun (scalefactor band) et que les valeurs spectrales appartenant à des bandes de facteur d'échelle qui ne sont utilisés dans aucun bloc d'information (SEGMENT_INFO) ne sont pas transmises.

8. Procédé selon la revendication 7, **caractérisé par le fait que** la signalisation des bandes de facteur d'échelle non utilisées a lieu de manière implicite.

9. Procédé selon l'une des revendications 1 à 8, **caractérisé par le fait que** le codage des canaux d'entrée et la reproduction des canaux d'entrée sur des canaux de données spectrales (TSC) ont lieu de sorte qu'il soit formé, pour la reconstruction de canaux de sortie, des combinaisons linéaires de valeurs spectrales reconstruites à partir de différents canaux de données spectrales.

10. Procédé selon l'une des revendications 1 à 9, **caractérisé par le fait que** le taux binaire pour la transmission des données codées de tous les canaux n'excède pas 384 kbits/sec.
